# NEUE EUROPÄISCHE PATENTSCHRIFT

(11) **EP 0 279 199 B2**
(45) Veröffentlichungstag und Bekanntmachung des Hinweises auf die Entscheidung über den Einspruch: **12.11.1997**
(45) Hinweis auf die Patenterteilung: 16.12.1992
(21) Anmeldenummer: 88100797.5
(22) Anmeldetag: 20.01.1988
(51) Int. Cl.: B05C 9/10

(54) **Vorrichtung zur Verarbeitung von UV-härtbaren Reaktionsharzmassen**
Apparatus for processing UV-curable resin compositions
Appareil pour traiter des mélanges de résine durcissables aux rayons UV

(30) Priorität: 02.02.1987 DE 3702999
(43) Veröffentlichungstag der Anmeldung: 24.08.1988
(73) Patentinhaber: SIEMENS AKTIENGESELLSCHAFT, 80333 München (DE)
(72) Erfinder: Bayer, Heiner, Dr., D-8037 Olching (DE); Habrich, Reiner, Dipl.-Ing., D-8011 Kirchheim-Heimstetten b. München (DE)

(56) Entgegenhaltungen:
- PATENT ABSTRACTS OF JAPAN, Band 10, Nr. 276 (C-373)[2332], 19. September 1986; & JP-A-61 98 740 (SURIIBONDO K.K.) 17-05-1986

## Beschreibung

Strahlenhärtbare Reaktionsharze werden vielfach thermisch härtbaren Reaktionsharzen vorgezogen, da sie neben einer nahezu unbeschränkten Gebrauchsdauer den Vorteil einer wesentlich rascheren Härtung bei niedrigen Temperaturen aufweisen.

Die Bestrahlung der strahlenhärtbaren Reaktionsharze geschieht üblicherweise nach der Applikation des Reaktionsharzes (europ. Patentanmeldung 0 094 915 A3). So werden z.B. UV-härtende Lacke nach dem Lackiervorgang flächig bestrahlt, Abdeckmassen für die Elektronik nach dem Abdeckvorgang ebenfalls flächig bestrahlt oder mit fokussierten Strahlungsquellen scannend belichtet, gegebenenfalls mit kurzen Blitzen.

Auch neuere Bestrebungen, kleine Elektronikbauteile (z.B. LEDs) mit UV-härtenden Massen zu umgießen, gehen meist davon aus, daß der Belichtungsvorgang nach dem Verguß, d.h. in der Gießform und gegebenenfalls durch diese hindurch, geschieht. Dies gilt auch für die Umhüllung und Einbettung passiver Bandelemente (z.B. Folienkondensatoren).

Bei all diesen Anwendungen besteht der Nachteil bzw. die Einschränkung, daß die Bestrahlung am "fertigen" Objekt geschehen muß, d.h. der Ort der Bestrahlung ist durch die zu überziehende oder einzuhüllende Vorrichtung festgelegt.

Die Bestrahlung geschieht in der Regel mit kurzwelliger, elektromagnetischer Strahlung oder Elektronenstrahlung, d.h. mit Strahlung, die leicht abgeschattet wird.

Daher sind Abschattungen durch Hinterschneidungen oder durch die zu umhüllende Vorrichtung selbst ein schwerwiegendes Problem.

Durch die Bestrahlung wird eine chemische Reaktion ausgelöst, indem die Bestrahlung absorbiert wird. In tiefere Schichten dringt nur mehr die um den absorbierten Anteil verminderte Strahlung ein. Auch die Zerfallsprodukte vieler Photoinitiatoren absorbieren UV-Strahlung, die zur Härtung tieferer Schichten nicht mehr zur Verfügung steht. Es ist daher bei größeren Schichtdicken praktisch unmöglich, die Strahlungsaktivierung homogen durchzuführen, selbst bei einer ideal UV-durchlässigen Harzmatrix, die in Praxis nicht gegeben ist.

Gemäß der europäischen Patentanmeldung 0 094 915 werden aus UV-reaktiven Harzen zunächst durch Bestrahlung lagerfähige aktivierte Vorstufen hergestellt, die nachfolgend heißgehärtet werden. Die Vorstufe wird direkt auf einem Substrat erzeugt. Die Nachteile bei Abschattung und größeren Schichtdicken sind auch hier vorhanden.

In der japanischen Patentanmeldung JP-A-61 98740 wird vorgeschlagen, ein UV-härtbares Reaktionsharz vor dem Aufbringen oder Vergießen in einem dünnen Rohr durch dieses mit UV-Licht zu bestrahlen.

Davon ausgehend besteht die Aufgabe der Erfindung darin, eine Vorrichtung zu schaffen, mit der es bei Verwendung von strahlenhärtbaren Reaktionsharzmassen möglich ist, beliebige Bauelemente also z.B. auch solche mit Hinterschneidungen und Abschattungen mit größeren Harzschichtdicken zu umhüllen oder abzudecken und dabei durch gleichmäßige Bestrahlung eine homogene Härtung der Reaktionsharzmasse zu erreichen, oder UV-empfindliche Substrate, die in der Mikroelektronik vielfach Verwendung finden, mit UV-härtbaren Massen zu umhüllen oder abzudecken und dabei eine homogene Härtung der Reaktionsharzmasse zu erreichen.

Diese Aufgabe wird gelöst durch eine Vorrichtung zum Verarbeiten von UV-härtbaren Reaktionsharzen gemäß Anspruch 1 mit einem Vorratsbehälter für ein Reaktionsharz, einem zumindest teilweise strahlendurchlässigen Bestrahlungsraum, einer Gießdüse und einer außerhalb des Bestrahlungsraumes angeordneten UV-Strahlenquelle, wobei der Bestrahlungsraum zwischen Vorratsbehälter und Gießdüse angeordnet ist und geometrisch so ausgestaltet ist, daß eine gleichmäßige Bestrahlung des gesamten, den Bestrahlungsraum durchströmenden Harzes vor dem Verlassen der Vorrichtung gewährleistet ist und bei dem der Bestrahlungsraum ein konkaves Profil aufweist, so daß darin längere Fließwege durch eine höhere Strömungsgeschwindigkeit des Harzes ausgeglichen werden,
oder durch eine Vorrichtung zum Verarbeiten von UV-härtbaren Reaktionsharzen gemäß Anspruch 2 mit einem Vorratsbehälter für ein Reaktionsharz, einem zumindest teilweise strahlendurchlässigen Bestrahlungsraum, einer Gießdüse und einer außerhalb des Bestrahlungsraumes angeordneten UV-Strahlenquelle, wobei der Bestrahlungsraum zwischen Vorratsbehälter und Gießdüse angeordnet ist und geometrisch so ausgestaltet ist, daß eine gleichmäßige Bestrahlung des gesamten, den Bestrahlungsraum durchströmenden Harzes vor dem Verlassen der Vorrichtung gewährleistet ist und bei der der Bestrahlungsraum als Tisch ausgebildet ist und bei dem eine ringförmige und eine zentrale Öffnung für den Ein- und Austritt des Harzes in den oder aus dem Bestrahlungsraum vorgesehen sind.

Mit der erfindungsgemäßen Vorrichtung können selbst Schichtdicken in der Größenordnung von mehreren Millimetern noch erzeugt werden, was bei der Bestrahlung eines bereits beschichteten Bauteils kaum oder zumindest nicht mit homogener Aushärtung möglich ist. Bei komplizierten Bauteilen mit Erhebungen entfallen die Unterschiede im Aushärtungsgrad, die auf unterschiedliche Entfernung zur Lichtquelle zurückzuführen sind.

Ferner ist es mit der erfindungsgemäßen Vorrichtung auch möglich, Imprägnierungen und Vergüsse verschiedenster Art durchzuführen. Die Vergüsse können in wiederverwendbaren oder verlorenen Formen durchgeführt werden. Beim Becherverguß von Bauelementen können die bereits in den Becher eingebrachten Bauteilelemente mit dem bestrahlten Harz vergossen werden oder aber in einen mit einer ausreichenden Menge bestrahlten Harzes vollgefüllten Becher eingebracht werden. Das Harz härtet in beiden Fällen ohne weitere Bestrahlung rasch aus. Solche Prozesse konnten bisher nur mit rein thermisch gehärteten Harzen durchgeführt werden.

Besonders vorteilhaft zeigt sich das Verfahren bei Klebstoffanwendungen. Es muß nämlich nicht mehr wie bisher bei Verklebungen mit UV-reaktiven Massen eines der zu verklebenden Fügeteile UV-durchlässig sein, sondern der Fügevorgang findet nach der Applikation des bestrahlten Harzes statt. Nachfolgend geliert letzteres in einer Dunkelreaktion und es kann gegebenenfalls auch thermisch in den gehärteten Endzustand übergeführt werden.

Da nicht Substrat und Harz, sondern nur das Harz der UV-Strahlung ausgesetzt wird, können mit der erfindungsgemäßen Vorrichtung selbst UV-empfindliche Bauteile z.B. optoelektronische Sensoren in einem raschen Prozeß mit einem qualitativ hochwertigen Harz abgedeckt werden.

Ein wesentlicher Vorteil ist schließlich auch darin zu sehen, daß ein und dieselbe Applikationsvorrichtung für verschiedene Anwendungsfälle eingesetzt werden kann, während eine Bestrahlung des Harzes nach der Applikation für verschiedene Anwendungen auch verschiedene Bestrahlungseinrichtungen erforderlich macht.

Die UV-bestrahlten Reaktionsharzmassen können anschließend noch mit Zusatzstoffen versehen werden, die sonst die UV-Anregung stören oder ihrerseits in unerwünschter Weise verändert werden. Solche Zusatzstoffe sind beispielsweise Pigmente und Farbstoffe.

Als UV-härtbare Reaktionsharzmassen kommen alle diejenigen in Betracht, bei denen auf eine UV-Belichtung eine Dunkelreaktion erfolgt, die auch ohne weitere UV-Bestrahlung weiterläuft. Für diese Weiterreaktion kann eine leichte Erwärmung förderlich sein.

Geeignete Reaktionsharzmassen härten bevorzugt nach einem kationischen Reaktionsmechanismus und sie sind bekannt. Erwähnt seien hier solche auf der Basis von Vinylverbindungen, wie Vinyläthern, Vinylestern und Vinylaromaten, sowie heterocyclischen Verbindungen, wie Oxiranen, Thiiranen, Acetidinen, Oxetanen, Oxolanen, Lactonen und verschiedenen Spiroverbindungen; auch Methylolverbindungen, wie Aminoplaste und Phenoplaste, sind geeignet.

Geeignete Photoinitiatoren sind Oniumsalze, wie z.B. Triarylsulfoniumsalze, wie sie z.B. in den US-Patentschriften 4 058 400 und 4 058 401 beschrieben sind sowie Diaryljodoniumsalze, s. z.B. US-PS 4 378 277. Stellvertretend für weitere geeignete Oniumsalzinitiatoren seien noch erwähnt Carbamoylsulfoxoniumsalze, s. z.B. EP 0 044 274 B1.

Als Anionen der Oniumsalze dienen vorwiegend nichtnukleophile Anionen starker Säuren, wie HBF₄, HPF₆, HAsF₆, HSbF₆, sowie auch die Anionen von Heteropolysäuren gemäß EP 0 136 379 A3.

Im Sinne der vorliegenden Erfindung bevorzugte Photoinitiatoren sind in Harzmischungen gemäß EP 0 094 915 A3 enthalten. Es handelt sich dabei um kationische härtbare Reaktionsharze bzw. Harzmischungen, die photoempfindliche -Arenkomplexe enthalten. Ein solcher Komplex der Formel 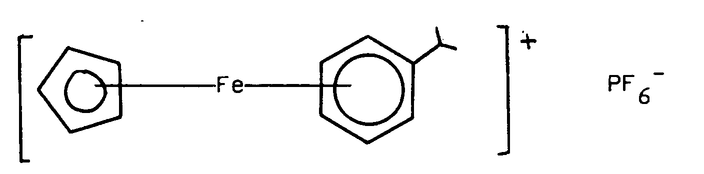 ist unter der Bezeichnung Experimenteller Photoinitiator CG 24-61 (Ciba Geigy GmbH) erhältlich. Weitere bevorzugte Photoinitiatorsysteme sind Bestandteil von Harzmischungen gemäß EP 0 091 131 A2, welche aus Aluminiumverbindungen und Silanolatvorstufen zusammengesetzt sind.

Die für das Verfahren verwendeten UV-härtbaren Reaktionsharze können auch nur zum Teil UV-reaktiv sein, d.h. im Harz können Funktionalitäten enthalten sein, die über einen anderen Weg als den der UV-Bestrahlung aktiviert werden, z.B. thermisch, durch Feuchte oder anaerob. Die Funktionalitäten können ganz, teilweise oder gar nicht im selben Molekül der UV-reaktiven Komponente eingebaut sein, was zu Nachvernetzung, Propfpolymerisation oder interpenetrierenden Netzwerken führen kann.

Es hat sich gezeigt, daß mit der erfindungsgemäßen Vorrichtung hergestellte Beschichtungen, insbesondere beschichtete Substrate, auch in beachtlichen Dicken eine gute Formhaltigkeit aufweisen. Ferner tritt Härtung auch an abgeschatteten Stellen ein. So eignet sich die erfindungsgemäße Vorrichtung für ein Verfahren, das besonders wirtschaftlich ist, insbesondere zum Schutz von Hybridschaltungen.

Das Verfahren wird durch die nachfolgenden Beispiele näher erläutert.

### Beispiel 1

| | | |
|---|---|---|
| 100 MT | MY 790^{R} | niedermolekulares destilliertes Bisphenol-A-Harz |
| 100 MT | CY 179^{R} | cycloaliphatisches Diepoxid |
| 4 MT | CG 24-61 | Experimenteller Photoinitiator |
| 0,5 MT | | Anthracen (als Sensibilisator) |

Die unbestrahlte Masse weist bei Raumtemperatur eine Lagerfähigkeit von mehr als einem halben Jahr und eine Gelierzeit von mehr als 100 Minuten bei 100°C auf.

Nach einer Bestrahlung von 10 s in einer Xenon-Blitzlichtapparatur RC 5000 in einer Einwegspritze aus PP-PE wird die Masse ausgefördert. Sie geliert bei Raumtemperatur in 20 s, bei 100° in weniger als 10 s.

### Beispiel 2

| | | |
|---|---|---|
| 100 MT | CY 179 ^{R} | cycloaliphatisches Diepoxid |
| 2,5 MT | CG 24-61 | Experimenteller Photoinitiator |
| 2,5 MT | Cumolhydroperoxid | |
| 0,25 MT | Anthracen | |

Lagerfähigkeit und Gelierzeit im unbehandelten Zustand wie Beispiel 1. Nach einer Bestrahlung von 5 s geliert die Masse bei Raumtemperatur in 20 s.

Applikationsvorrichtungen für Reaktionsharze bestehen im allgemeinen aus einem Vorratsbehälter für die reaktive Masse, einem Dosierventil und einer Gießdüse. Der Vorratsbehälter kann gegebenenfalls mit einem Rührwerk ausgerüstet sein und/oder mit Druck beaufschlagt werden.

Übliche Reaktionsharzmassen zeigen aufgrund ihrer Reaktivität einen Viskositätsanstieg und haben damit eine beschränkte Gebrauchsdauer auch bei langen Härtezeiten. Reaktionsharzmassen mit kurzer Härtezeit und damit kurzer Gebrauchsdauer erfordern üblicherweise einen hohen apparativen Aufwand zur Aufbereitung und Verarbeitung.

Nach dem beschriebenen Verfahren werden in einer einfachen Applikationsvorrichtung Reaktionsharzmassen verwendet, die im nichtaktivierten Zustand nahezu unbegrenzte Gebrauchsdauer aufweisen und unmittelbar vor der Applikation mittels UV-Licht aktiviert werden. Diese Aktivierung geschieht in einem Reaktor 17, der aus einem Bestrahlungsraum 4, einer UV-Strahlungsquelle 5 und gegebenenfalls einem Reflektor 6 besteht.

Die Zuführung der nichtaktivierten Masse 1 erfolgt auf einer bevorzugten Seite des Bestrahlungsraumes 4, die Abführung der aktivierten Masse an einer der Zuführung möglichst weit entfernt liegenden Seite, so daß nichtaktivierte und aktivierte Masse nicht miteinander vermischt werden können. Die nichtaktivierte Reaktionsharzmasse 1 wird in dem Bestrahlungsraum 4 entweder kontinuierlich während des Durchströmens oder diskontinuierlich während des Stillstandes bestrahlt und damit aktiviert.

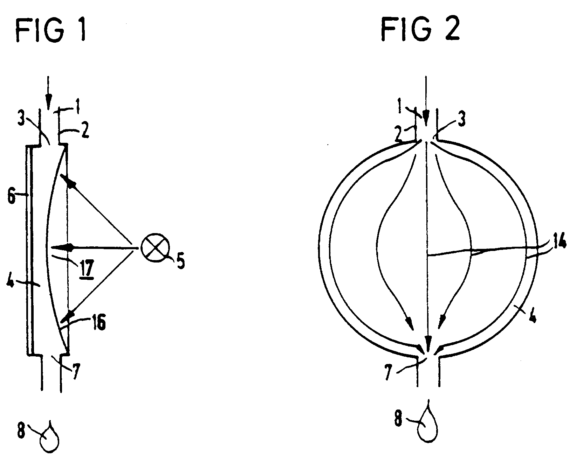

Die Figuren 1 bis 4 zeigen Ausführungsbeispiele der Erfindung in schematischen Ansichten.

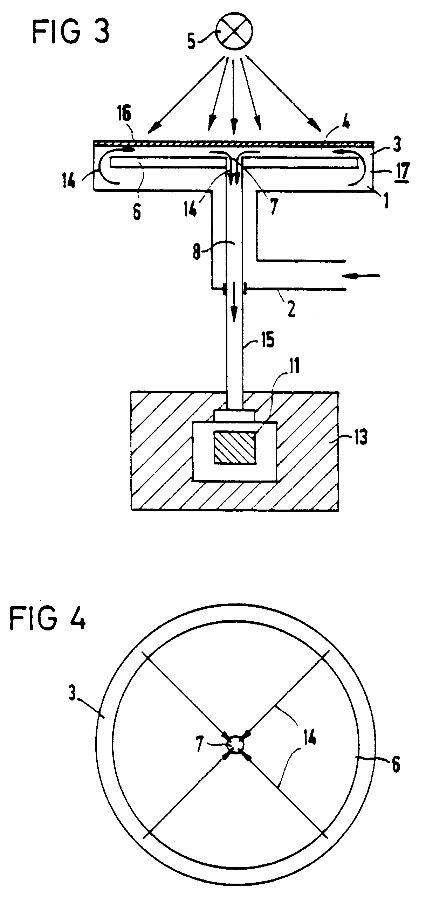

Ausschnitte geeigneter Vorrichtungen sind in den Figuren 1 und 3 dargestellt, die zum Verarbeiten einer nichtaktivierten Reaktionsharzmasse 1 angewendet werden können. Eine Vorrichtung besteht aus einem Bestrahlungsraum 4 mit einem lichtdurchlässigen Fenster 16. Die Strömungsrichtung des Harzes in der Vorrichtung ist mit Bezugszeichen 14 bezeichnet. Zur Verbesserung der Lichtausbeute ist gegenüber der UV-Strahlungsquelle 5 hinter dem Bestrahlungsraum 4 ein ebener Reflektor 6 angeordnet.

Figur 1 zeigt den Querschnitt einer besonders strömungsgünstigen Ausführung des Bestrahlungsraumes 4. Hierbei ist das Fenster 16 des Bestrahlungsraumes 4 kalottenförmig nach innen gewölbt. Durch diese Ausführung kann eine gleichmäßige Bestrahlung der nichtaktivierten Reaktionsharzmasse 1 erreicht werden, denn die sich einstellenden, nach außen zunehmenden Strömungsgeschwindigkeiten gleichen längere Fließwege aus.

In Figur 2 ist der Strömungsverlauf der Reaktionsharzmasse im Bestrahlungsraum 4 anhand der Strömungslinien 14 erkennbar. Eine solche Anordnung ist besonders geeignet für die Verarbeitung von gefüllten Reaktionsharzmassen.

Gemäß Figur 3 ist der Bestrahlungsraum 4 in seiner Tiefe veränderbar, so daß die Schichtdicke den Eigenschaften der zu bestrahlenden Reaktionsharzmasse entsprechend eingestellt werden kann. Dies geschieht durch Verschieben des mit dem Reflektor 6 verbundenen, als Rohr ausgebildeten Gießkanals 15 in axialer Richtung. Dies ist besonders vorteilhaft, wenn unterschiedliche, mit UV-Licht aktivierbare Massen mit oder ohne Füllstoff mit demselben Reaktor verarbeitet werden. So lassen sich die Schichtdicken der Reaktionsharzmassen beispielsweise an ihr UV-Absorptionsvermögen und ihre Viskosität optimal anpassen. Ein weiterer Vorteil dieser Ausführung ist die zentrische Anordnung des Reflektors 6 zur ringförmigen Eintrittsöffnung 3 und zur zentralen Austrittsöffnung 7, wie dies die in Fig. 4 gezeigte Draufsicht zeigt. Die Fließwege der zu aktivierenden Harzmasse sind dann absolut gleich und es wird somit gleiche Strahlungsdosis erreicht. Mit der aktivierten Reaktionsharzmasse 8 wird hierbei ein zu umhüllendes Objekt 11 über den direkt angeschlossenen Gießkanal 15 in einer geschlossenen Gießform 13 umgossen.

In bestimmten Fällen ist es zweckmäßig, der aktivierten Reaktionsharzmasse 8 nach dem Bestrahlungsprozeß weitere Zusatzstoffe zuzumischen, die am Aktivierungsprozeß nicht teilnehmen, wie Flexibilisatoren, Trennmittel, Haftvermittler, Alterungsschutzmittel u.ä. und/oder auch Anteile der Matrixkomponenten. Dies gilt besonders für Harzbestandteile, die diesen Prozeß stören, wie UV-undurchlässige Füllstoffe, z.B. Metallpulver, Titandioxid, Ruß und bestimmte Farbstoffe. Die Zuführung der Zusatzstoffe erfolgt unmittelbar nach der Austrittsöffnung 7. Anschließend wird mittels eines dynamischen oder statischen Durchlaufmischers bekannter Bauart homogenisiert.

Es ist vorteilhaft, die gesamte Applikationsvorrichtung gleich welcher Bauart aus lichtundurchlässigem Material, wie z.B. nichtrostendem Stahl, eingefärbtem Kunststoff u.ä., zu gestalten mit Ausnahme des Fensters 16 für den Lichteintritt in den Bestrahlungsraum 4 und gegebenenfalls eines für die Funktion des Reflektors 6 notwendigen Fensters. Dadurch wird vermieden, daß die Reaktionsharzmasse unbeabsichtigt bereits vor dem Bestrahlungsraum 4 aktiviert wird und vernetzt.

Das Fenster 16 besteht aus lichtdurchlässigem Material, wie z.B. Quarzglas, Acrylglas o. ä. in Form von Scheiben, Rohren oder Folien.

Als Bestrahlungsquellen sind prinzipiell alle üblichen UV-Quellen geeignet, also z.B. Edelgas, Metall- oder Metallhalogenidstrahler, Kohlelichtbögen oder Laser verschiedenster Art. Voraussetzung ist, daß in Anpassung an den Photoinitiator Licht geeigneter Wellenlänge mit ausreichender Energiedichte zur Verfügung steht. Diese Tatsachen sind der Fachwelt bekannt.

## Patentansprüche

1. Vorrichtung zum Verarbeiten von UV-härtbaren Reaktionsharzen mit einem Vorratsbehälter für ein Reaktionsharz, einem zumindest teilweise strahlendurchlässigen Bestrahlungsraum (4), einer Gießdüse und einer außerhalb des Bestrahlungsraumes (4) angeordneten UV-Strahlenquelle (5), wobei der Bestrahlungsraum (4) zwischen Vorratsbehälter und Gießdüse angeordnet ist und geometrisch so ausgestaltet ist, daß eine gleichmäßige Bestrahlung des gesamten, den Bestrahlungsraum (4) durchströmenden Harzes vor dem Verlassen der Vorrichtung gewährleistet ist und bei dem der Bestrahlungsraum (4) ein konkaves Profil aufweist, so daß darin längere Fließwege durch eine höhere Strömungsgeschwindigkeit des Harzes ausgeglichen werden.

2. Vorrichtung zum Verarbeiten von UV-härtbaren Reaktionsharzen mit einem Vorratsbehälter für ein Reaktionsharz, einem zumindest teilweise strahlendurchlässigen Bestrahlungsraum (4), einer Gießdüse und einer außerhalb des Bestrahlungsraumes (4) angeordneten UV-Strahlenquelle (5), wobei der Bestrahlungsraum (4) zwischen Vorratsbehälter und Gießdüse angeordnet ist und geometrisch so ausgestaltet ist, daß eine gleichmäßige Bestrahlung des gesamten, den Bestrahlungsraum (4) durchströmenden Harzes vor dem Verlassen der Vorrichtung gewährleistet ist und bei der der Bestrahlungsraum als Tisch ausgebildet ist und bei dem eine ringförmige und eine zentrale Öffnung (3, 7) für den Ein- und Austritt des Harzes in den oder aus dem Bestrahlungsraum (4) vorgesehen sind.

3. Vorrichtung nach Anspruch 2,
bei dem der Bestrahlungsraum (4) in seiner Tiefe veränderbar ist.

4. Vorrichtung nach Anspruch 2 oder 3,
bei dem ein Reflektor vorgesehen ist, welcher zur ringförmigen Eintrittsöffnung (3) und zur zentralen Austrittsöffnung (7) zentriert ist.

5. Anwendung einer Vorrichtung nach einem der Ansprüche 1 bis 4, wobei man die im Bestrahlungsraum (4) aktivierte Harzmasse auf ein Substrat aufbringt oder ein Objekt eingießt.

## Claims

1. Apparatus for processing UV-curable resins comprising a stock container for a reaction-curable resin, an at least partially radiation-transparent irradiation chamber (4), a casting nozzle and a UV radiation source (5) disposed outside the irradiation chamber (4), the irradiation chamber (4) being disposed between stock container and casting nozzle and being geometrically so designed that a uniform irradiation of all the resin flowing through the irradiation chamber (4) before it leaves the apparatus is ensured, in which apparatus the irradiation chamber (4) has a concave profile so that fairly long flow paths therein are compensated for by a higher resin flow velocity.

2. Apparatus for processing UV-curable resins comprising a stock container for a reaction-curable resin, an at least partially radiation-transparent irradiation chamber (4), a casting nozzle and a UV radiation source (5) disposed outside the irradiation chamber (4), the irradiation chamber (4) being disposed between stock container and casting nozzle and being geometrically so designed that a uniform irradiation of all the resin flowing through the irradiation chamber (4) before it leaves the apparatus is ensured, in which apparatus the irradiation chamber is constructed as a table, and in which apparatus an annular opening (3) and a central opening (7) are provided for the inflow and outflow of the resin into and out of the irradiation chamber (4).

3. Apparatus according to Claim 2, in which the depth of the irradiation chamber (4) can be altered.

4. Apparatus according to Claim 2 or 3, in which a reflector is provided which is centred with respect to the annular inflow opening (3) and with respect to the central outflow opening (7).

5. Application of an apparatus according to one of Claims 1 to 4, in which the resin compound activated in the irradiation chamber (4) is applied to a substrate or a specimen.

## Revendications

1. Dispositif de traitement de résines composites durcissables aux rayons UV, comprenant un réservoir pour une résine composite, une chambre d'exposition (4) au moins partiellement transparente au rayonnement, une buse de coulée et une source de rayons UV (5) disposée à l'extérieur de la chambre d'exposition (4), la chambre d'exposition (4) étant disposée entre le réservoir et la buse de coulée et ayant une géométrie telle qu'une exposition uniforme de toute la résine passant dans la chambre d'exposition (4) est assurée avant qu'elle ne quitte le dispositif, et la chambre d'exposition (4) présentant un profil concave, de manière à y compenser des trajets d'écoulement plus longs par une plus grande vitesse d'écoulement de la résine.

2. Dispositif de traitement de résines composites durcissables aux rayons UV, comprenant un réservoir pour une résine composite, une chambre d'exposition (4) au moins partiellement transparente au rayonnement, une buse de coulée et une source de rayons UV (5) disposée à l'extérieur de la chambre d'exposition (4), la chambre d'exposition (4) étant disposée entre le réservoir et la buse de coulée et ayant une géométrie telle qu'une exposition uniforme de toute la résine passant dans la chambre d'exposition (4) est assurée avant qu'elle ne quitte le dispositif, la chambre d'exposition étant constituée sous la forme d'une table, et un orifice annulaire et un orifice central (3,7) étant prévus pour l'entrée et la sortie de la résine, dans et hors de la chambre d'exposition (4).

3. Dispositif suivant la revendication 2, caractérisé en ce que la profondeur de la chambre d'exposition (4) peut être modifiée.

4. Dispositif suivant la revendication 2 ou 3, caractérisé en ce qu'il est prévu un réflecteur (6) qui centre les rayons UV sur l'orifice (3) d'entrée annulaire et sur l'orifice (7) de sortie central.

5. Utilisation d'un dispositif suivant l'une des revendications 1 à 4, qui consiste à déposer la composition de résine activée dans la chambre d'exposition (4) sur un substrat, ou à la couler en un objet.
